# EUROPÄISCHE PATENTSCHRIFT

(11) **EP 3 848 616 B1**
(45) Veröffentlichungstag und Bekanntmachung des Hinweises auf die Patenterteilung: **24.09.2025**
(21) Anmeldenummer: 20200685.4
(22) Anmeldetag: 08.10.2020
(51) Int. Cl.: F16H 7/02, A01D 41/14, F16H 7/08, A01D 69/00

(54) **VERFAHREN ZUM BETRIEB EINES RIEMENGETRIEBES SOWIE RIEMENGETRIEBE**
BELT DRIVE AND METHOD FOR OPERATING A BELT DRIVE
PROCÉDÉ DE FONCTIONNEMENT D'UNE TRANSMISSION À COURROIE AINSI QUE TRANSMISSION À COURROIE

(30) Priorität: 08.01.2020 DE 102020100192
(43) Veröffentlichungstag der Anmeldung: 14.07.2021
(73) Patentinhaber: CLAAS Selbstfahrende Erntemaschinen GmbH, 33428 Harsewinkel (DE)
(72) Erfinder: Kühn, Michael, 48361 Beelen (DE)
(74) Vertreter: CLAAS Gruppe

(56) Entgegenhaltungen:
- EP-A1- 2 636 297
- DE-T2- 60 300 438
- KR-Y1- 200 332 316
- US-A- 5 984 436
- US-A1- 2017 204 945

## Beschreibung

Die vorliegende Anmeldung betrifft ein Verfahren zum Betrieb eines Riemengetriebes gemäß dem Oberbegriff von Anspruch 1. Ferner betrifft die vorliegende Anmeldung ein Riemengetriebe gemäß dem Oberbegriff von Anspruch 12.

Das Riemengetriebe umfasst mindestens eine Antriebsscheibe, mindestens eine Abtriebsscheibe, mindestens einen Treibriemen sowie mindestens einen Riemenspanner. Bei der Antriebsscheibe handelt es sich um diejenige Scheibe, die mittels einer Antriebseinrichtung, insbesondere einer Verbrennungskraftmaschine, antreibbar ist. Der Treibriemen ist sowohl mit der Antriebsscheibe als auch mit der Abtriebsscheibe in Kraft übertragender Weise gekoppelt, sodass ein auf die Antriebsscheibe aufgebrachtes Drehmoment mittels des Treibriemens auf die Abtriebsscheibe übertragbar ist. Das Riemengetriebe kann zusätzlich zu der Antriebsscheibe und der Abtriebsscheibe weitere Scheiben umfassen, beispielsweise Umlenkscheiben oder dergleichen. Bei dem Treibriemen handelt es sich um einen in sich geschlossenen, endlosen Riemen, der die Antriebsscheibe und die Abtriebsscheibe jeweils teilweise umspannt und zumindest während eines Betriebs des Riemengetriebes derart gespannt ist, dass er dazu geeignet ist, das Drehmoment von der Antriebsscheibe auf die Abtriebsscheibe zu übertragen.

Um eine Spannung des Treibriemens dauerhaft herzustellen, wirkt der Riemenspanner mit dem Treibriemen zusammen. Insbesondere kann mittels des Riemenspanners eine Spannkraft auf den Treibriemen, insbesondere in eine senkrecht zu einer Mittelachse des Treibriemens orientierte Richtung, aufgebracht werden, um in dem Treibriemen eine Zugspannung zu erzeugen oder eine solche zu erhöhen. Der Riemenspanner verfügt in aller Regel über ein Spannglied, das beispielsweise von einer Spannrolle gebildet sein kann. Zwecks Ausübung der Spannkraft auf den Treibriemen umfasst der Riemenspanner typischerweise mindestens ein Spannorgan, das beispielsweise von einer vorgespannten Druckfeder gebildet sein kann.

Ein Riemengetriebe der vorstehend beschriebenen Art ist aus der EP 2 636 297 A1 bekannt und kann insbesondere dazu verwendet werden, ein Antriebsdrehmoment einer Verbrennungskraftmaschine auf ein Arbeitsorgan einer landwirtschaftlichen Erntemaschine zu übertragen. Bei dem Arbeitsorgan kann es sich beispielsweise um eine Einzugswalze eines Schneidwerks handeln, wie es beispielsweise bei einem Feldhäcksler oder einem Mähdrescher zum Einsatz kommen kann.

Das Verfahren gemäß der vorliegenden Anmeldung sieht vor, dass das Riemengetriebe wahlweise in einem Normalbetrieb in einem Reversierbetrieb betrieben wird. Der Reversierbetrieb geht damit einher, dass eine Antriebsrichtung der Antriebsscheibe umgekehrt wird, das heißt die Antriebsscheibe sich bei Betrieb des Riemengetriebes in seinem Reversierbetrieb in eine zu der Antriebsrichtung bei Vorliegen des Riemengetriebes in seinem Normalbetrieb gegensinnige Antriebsrichtung dreht. Ein solcher Reversierbetrieb dient beispielsweise dazu, eine etwaige Blockade eines an die Abtriebsscheibe angeschlossenen Arbeitsorgans aufzulösen. Eine solche Vorgehensweise ist beispielsweise bei einer vorstehend beschriebenen Einzugswalze eines Schneidwerks einer landwirtschaftlichen Erntemaschine bekannt.

Prinzipbedingt geht der Wechsel von einem Betrieb des Riemengetriebes in seinem Normalbetrieb hin zu seinem Reversierbetrieb sowie umgekehrt damit einher, dass sich ein Spannungszustand des Treibriemens verändert. Dies liegt darin begründet, dass das Umschalten von dem Normalbetrieb in den Reversierbetrieb und umgekehrt mit einer Lastumkehr in dem Treibriemen einhergeht, infolge der das Lasttrum (auch Arbeitstrum genannt) des Treibriemens zu dessen Leertrum wird und umgekehrt. Der Riemenspanner ist typischerweise derart angeordnet, dass er bei Vorliegen des Riemengetriebes in dessen Normalbetrieb die zur Verfügung gestellte Spannkraft auf das Leertrum des Treibriemens ausübt. Im Zuge der Umschaltung der Betriebsweise des Riemengetriebes hin zu dem Reversierbetrieb wird auf das vormalige Leertrum, das im Weiteren zum Lasttrum wird, nunmehr eine erhöhte Zugspannung aufgebracht, infolge der der Treibriemen schlagartig eine größere Gegenkraft gegen den Riemenspanner ausübt als dies im Normalbetrieb des Riemengetriebes der Fall ist. Dies hat zur Folge, dass der Riemenspanner in eine von dem Treibriemen abgewandte Richtung ausweicht bzw. infolge der schlagartigen Anspannung des Treibriemens in seinem Leertrum bzw. der schlagartigen Umschaltung des Leertrums zu dem Lasttrum geradezu von dem Treibriemen weggedrückt wird. Dies hat zur Folge, dass der Treibriemen zumindest für einen Augenblick, bis der Riemenspanner seine Spannkraft wieder zuverlässig auf den Treibriemen ausüben kann, seine Zugspannung verliert, woraufhin es zu einem Schlupf zwischen den Treibriemen und der Antriebsscheibe kommen kann.

Der vorliegenden Anmeldung mithin die Aufgabe zugrunde, ein Verfahren zum Betrieb eines Riemengetriebes sowie ein Riemengetriebe bereitzustellen, bei denen ein Wechsel zwischen Normalbetrieb und Reversierbetrieb möglichst schlupffrei erfolgen kann.

Die zugrunde liegende Aufgabe wird erfindungsgemäß mittels des Verfahrens mit den Merkmalen des Anspruchs 1 gelöst. Vorteilhafte Ausgestaltungen ergeben sich aus den Unteransprüchen 2 bis 11.

Das erfindungsgemäße Verfahren ist dadurch gekennzeichnet, dass die Spannkraft des Riemenspanners korrespondierend mit einem Wechsel zwischen dem Normalbetrieb und dem Reversierbetrieb verändert wird. Insbesondere wird die Spannkraft im Zuge des Wechsels von dem Normalbetrieb zu dem Reversierbetrieb erhöht, sodass der Riemenspanner trotz dem vorstehend beschriebenen Anstieg der Zugspannung in dem Treibriemen, die im Zuge des Wechsels auftritt, nicht in der im Stand der Technik zu beklagenden Weise von dem Treibriemen "weggedrückt" wird und infolgedessen den Kontakt zu dem Treibriemen verliert. Die Veränderung der Spannkraft korreliert dabei zeitlich grundsätzlich mit dem Vorgang des Wechsels zwischen dem Normalbetrieb und dem Reversierbetrieb, wobei eine zeitlich exakte Übereinstimmung der Veränderung der Spannkraft und des Wechsels nicht zwingend erforderlich ist. Stattdessen kann es vorteilhaft sein, die Veränderung der Spannkraft dem Wechsel zwischen dem Normalbetrieb und dem Reversierbetrieb vorlaufen oder nachlaufen zu lassen. Insbesondere ein Vorlaufen beim Wechsel vom Normalbetrieb in den Reversierbetrieb kann sinnvoll sein, damit die Spannkraft des Riemenspanners bei Eintritt der Lastumkehr in dem Treibriemen bereits vollständig anliegt. Bevorzugt wird die Veränderung der Spannkraft des Riemenspanners in einem Zeitraum von maximal 5 Sekunden, vorzugsweise maximal 3 Sekunden, weiter vorzugsweise maximal 1 Sekunde, vor dem Zeitpunkt des Wechsels des Riemengetriebes zwischen dem Normalbetrieb und dem Reversierbetrieb vorgenommen.

Das erfindungsgemäße Verfahren hat viele Vorteile. Insbesondere wird erreicht, dass der Riemenspanner auch im Zuge des Wechsels zwischen dem Normalbetrieb und dem Reversierbetrieb, insbesondere im Zuge des Wechsels von dem Normalbetrieb zu dem Reversierbetrieb, durchgehend den Treibriemen auf Spannung hält und infolgedessen das Auftreten eines Schlupfs vermieden werden kann.

In einer vorteilhaften Ausgestaltung des erfindungsgemäßen Verfahrens wird die Spannkraft beim Wechsel von dem Normalbetrieb zu dem Reversierbetrieb erhöht und beim Wechsel von dem Reversierbetrieb zu dem Normalbetrieb verringert. Ferner ist es denkbar, dass die Spannkraft im Moment des Wechsels von dem Normalbetrieb zu dem Reversierbetrieb des Riemengetriebes kurzzeitig auf ein maximales Niveau angehoben wird und danach, sobald ein Spannungspeak in dem Treibriemen infolge des Wechsels abgebaut ist, auf ein demgegenüber geringeres Niveau abgesenkt wird. Ungeachtet dessen ist es vorteilhaft, wenn das Niveau der Spannkraft bei Vorliegen des Riemengetriebes in seinem Reversierbetrieb größer ist als bei Vorliegen des Riemengetriebes in seinem Normalbetrieb. Dies ist der grundsätzlich gegenläufigen Zuordnung der Abschnitte des Treibriemens als Leertrum und Lasttrum geschuldet.

Weiterhin kann ein solches Verfahren besonders vorteilhaft sein, bei dem die Spannkraft des Riemenspanners mittels eines Spannglieds auf den Treibriemen aufgebracht wird. Ein solches Spannglied kann insbesondere von einer Spannrolle gebildet sein, die frei um eine Drehachse rotierbar gelagert ist und gegen den umlaufenden Treibriemen abrollen kann. Das Spannglied wirkt mit einem Hydraulikzylinder zusammen, der mit einem hydraulischen System zusammenwirkt. Letzteres kann insbesondere mindestens eine Druckquelle umfassen, mittels der ein Arbeitsfluid unter Druck setzbar ist. Zwecks Veränderung der Spannkraft ist es folglich insbesondere denkbar, den an dem Hydraulikzylinder anliegenden hydraulischen Druck zu verändern, wobei vorteilhafterweise zwecks Erhöhung der Spannkraft der hydraulische Druck erhöht wird.

Bei Verwendung eines solchen hydraulischen Systems kann es von Vorteil sein, wenn der hydraulische Druck, der in dem Hydraulikzylinder anliegt, mittels Umschaltens zumindest zwischen einem ersten Druckminderventil des hydraulischen Systems und einem zweiten Druckminderventil des hydraulischen Systems verändert wird. Insbesondere ist es denkbar, dass dieses Umschalten mittels eines Steuerventils vorgenommen wird, wobei das erste Druckminderventil den hydraulischen Druck einer Druckquelle des hydraulischen Systems auf ein Normaldruckniveau und das zweite Druckminderventil den hydraulischen Druck der Druckquelle auf ein Hochdruckniveau mindern. Das Hochdruckniveau ist dabei höher als das Normaldruckniveau. Eine Umschaltung zwischen den beiden Druckminderventilen hat mithin zur Folge, dass der an dem Hydraulikzylinder anliegende hydraulische Druck verändert wird. Auf diese Weise kann besonders einfach korrespondierend mit einem Wechsel des Riemengetriebes von seinem Normalbetrieb in seinen Reversierbetrieb die Spannkraft mittels Umschaltens zwischen den beiden Druckminderventilen erhöht werden.

Alternativ zu einem Umschalten zwischen verschiedenen Druckminderventilen und damit einhergehend verschiedenen Niveaus des an dem Hydraulikzylinder anliegenden hydraulischen Drucks kann es gleichermaßen vorteilhaft sein, wenn mindestens ein Druckminderventil des hydraulischen Systems zwischen einem Normalzustand und einem Hochzustand umgeschaltet wird. Bei diesem Ansatz werden mithin nicht mehrere Druckminderventile alternativ bzw. wechselweise zur Einstellung des anliegenden hydraulischen Drucks verwendet, sondern lediglich ein Druckminderventil, das als solches beeinflusst wird. Die Folge dieser Beeinflussung, das heißt das Umschalten zwischen dem Normalzustand und dem Hochzustand, bewirkt eine Veränderung des an dem Hydraulikzylinder anliegenden hydraulischen Drucks, wobei das Druckminderventil letzteren bei Vorliegen in seinem Normalzustand stärker mindert als bei Vorliegen in seinem Hochzustand. Entsprechend ist es sinnvoll, das Druckminderventil derart umzuschalten, dass es korrespondierend mit dem Wechsel des Riemengetriebes von dessen Normalbetrieb zu dessen Reversierbetrieb von seinem Normalzustand in seinem Hochzustand umgeschaltet wird. Der damit einhergehende Anstieg des hydraulischen Drucks an dem Hydraulikzylinder des Riemenspanners bewirkt einen entsprechenden Anstieg der Spannkraft, sodass gemäß vorstehender Beschreibung die zugrundeliegende Aufgabe gelöst wird.

Um das beschriebene Umschalten des Druckminderventils zwischen seinem Normalzustand und seinem Hochzustand zu bewirken, kann es besonders vorteilhaft sein, das Druckminderventil mit mindestens einem, vorzugsweise elektrischen, Aktor auszustatten, mittels dessen das Druckminderventil umgeschaltet wird. Vorzugsweise wird der Aktor mit einem Schaltsignal angesteuert, das korrespondierend mit einem Wechsel des Riemengetriebes zwischen dessen Normalbetrieb und dessen Reversierbetrieb erzeugt und abgesetzt wird. Das Schaltsignal kann insbesondere von einem Signalgeber stammen. Wie vorstehend bereits beschrieben, ist es dabei grundsätzlich denkbar, dass die Zeitpunkte des Umschaltens des Druckminderventils zwischen seinem Normalzustand und seinem Hochzustand sowie des Wechsels des Riemengetriebes von seinem Normalbetrieb und seinem Reversierbetrieb zeitlich gleichzeitig oder leicht versetzt stattfinden. Entscheidend ist lediglich der kausale Zusammenhang der beiden Vorgänge, sodass die Veränderung der Spannkraft im Zusammenhang mit dem Wechsel der Betriebsweisen des Riemengetriebes steht und auf diese Weise einen Schlupf des Treibriemens verhindern kann.

Alternativ zu einem Umschalten des Druckminderventils mittels eines Aktors ist es ferner denkbar, dass das Druckminderventil mit einem Offsetdruck beaufschlagt wird, infolgedessen die Arbeitsweise des Druckminderventils verändert wird. Insbesondere wird der Ausgangsdruck des Druckminderventils, auf den das Druckminderventil den jeweils anliegenden Eingangsdruck der Druckquelle des hydraulischen Systems mindert, verändert, insbesondere angehoben. In Abwesenheit des Offsetdrucks befindet sich ein solches Druckminderventil mithin in seinem Normalzustand, in Gegenwart des Offsetdrucks in seinem Hochzustand. Der Offsetdruck kann insbesondere mittels eines zweiten Druckminderventils bereitgestellt werden. Mittels letzteren kann besonders einfach ein definierter Offsetdruck bereitgestellt werden, mittels dessen das beschriebene Umschalten des ersten Druckminderventils zwischen seinem Normalzustand und seinem Hochzustand steuerbar ist.

Bei der genannten Vorgehensweise ist es weiterhin zu bevorzugen, die beiden Druckminderventile mittels eines Steuerventils hydraulisch zu koppeln, wobei mittels Betätigung des Steuerventils die Beaufschlagung des ersten Druckminderventils mit dem Offsetdruck wechselweise aktiviert oder deaktiviert wird. Das Steuerventil kann insbesondere einen, vorzugsweise elektrischen, hydraulischen oder pneumatischen, Aktor aufweisen, sodass das Steuerventil mit einem elektrischen, hydraulischen oder pneumatischen Schaltsignal ansteuerbar ist. Letzteres kann beispielsweise von einem Signalgeber erzeugt werden, der das Schaltsignal korrespondierend mit dem Wechsel des Riemengetriebes von seinem Normalbetrieb zu seinem Reversierbetrieb und/oder umgekehrt erzeugen und an den Aktor absetzen kann.

Insbesondere kann ein solches Verfahren besonders von Vorteil sein, bei dem die Ansteuerung des Aktors, mittels dessen das Steuerventil geschaltet wird, hydraulisch erfolgt. Diese Vorgehensweise erlaubt eine besonders effiziente Koppelung der Spannkraft des Riemenspanners mit der Betriebsweise des Riemengetriebes. Dies gilt insbesondere dann, wenn das Riemengetriebe dazu genutzt wird, eine Hydraulikpumpe anzutreiben, die in einen hydraulischen Kreislauf eingebunden ist. In Abhängigkeit von der Betriebsweise des Riemengetriebes wirkt die Hydraulikpumpe entweder als eine eben solche (Normalbetrieb) oder umgekehrt als Hydraulikmotor (Reversierbetrieb). In Abhängigkeit von dieser Betriebsweise wird ein hydraulischer Druck, der auf eine Hydraulikleitung des hydraulischen Kreislaufs wirkt, zwischen einem ersten und einem zweiten Niveau wechseln, wobei das erste Niveau während des Normalbetriebs und das zweite Niveau während des Reversierbetriebs vorliegen. Hierbei kann insbesondere das erste Niveau unterhalb des zweiten Niveaus liegt. Der hydraulische Druck der Hydraulikleitung kann dann besonders einfach als Schaltsignal bzw. zur Schaltung des hydraulischen Aktors herangezogen werden. Somit schaltet der hydraulische Aktor immer dann das Steuerventil von einer Stellung in eine andere Stellung, wenn sich der hydraulische Druck in der Hydraulikleitung des hydraulischen Kreislaufs ändert. Da dies zeitlich immer mit dem Wechsel zwischen dem Normalbetrieb und dem Reversierbetrieb des Riemengetriebes stattfindet, führt letzteres zwangsläufig zu einer Veränderung der Stellung des Steuerventils und mithin zu einer Umschaltung des ersten Druckminderventils zwischen seinem Hochzustand und seinem Normalzustand. Da letzteres einen unmittelbaren Einfluss auf die Spannkraft des Riemenspanners hat, ist mittels der beschriebenen Vorgehensweise wunschgemäß die Koppelung des Wechsels der Betriebsweise des Riemengetriebes mit einer Veränderung der Spannkraft des Riemenspanners geschaffen.

In vorrichtungstechnischer Hinsicht wird die zugrunde liegende Aufgabe erfindungsgemäß mit einem Riemengetriebe mit den Merkmalen des Anspruchs 12 gelöst. Vorteilhafte Ausgestaltungen ergeben sich aus den Unteransprüchen 13 bis 17.

Das erfindungsgemäße Riemengetriebe ist dadurch gekennzeichnet, dass die Spannkraft des Riemenspanners korrespondierend mit einem Wechsel zwischen dem Normalbetrieb und dem Reversierbetrieb veränderbar ist. Hierbei ist zur Erzielung des erfindungsgemäßen Erfolges eine zeitliche Kopplung der Veränderung der Spannkraft und dem Wechsel zwischen dem Normalbetrieb und dem Reversierbetrieb erforderlich, wobei gleichermaßen eine zeitgleiche Ausführung sowie eine zeitlich versetzte Ausführung gemäß vorstehender Beschreibung denkbar sind.

Das erfindungsgemäße Verfahren ist mittels des erfindungsgemäßen Riemengetriebes besonders einfach ausführbar. Hierbei werden bereits dargelegten Vorteile erzielt. Insbesondere wird die Möglichkeit geschaffen, ein "Wegdrücken" des Riemenspanners von dem Treibriemen im Zuge des Wechsels des Riemengetriebes von dessen Normalbetrieb zu dessen Reversierbetrieb zu unterbinden. Hierdurch wird das im Stand der Technik zu beklagende Auftreten eines temporären Spannungsabfalls in dem Treibriemen und eine damit einhergehenden Schlupfs zwischen dem Treibriemen und der Antriebsscheibe zumindest weitgehend vermieden, vorzugsweise vollständig unterbunden.

Vorteilhafterweise umfasst das Riemengetriebe ein hydraulisches System, das mit einem Hydraulikzylinder des Riemenspanners verbunden ist. Die Spannkraft des Riemenspanners ist auf diese Weise mittels Beaufschlagung des Hydraulikzylinders mit hydraulischem Druck einer Druckquelle des hydraulischen Systems aufbringbar. Bei der Druckquelle kann es sich insbesondere um eine Pumpe handeln, mittels der ein Arbeitsfluid unter Druck setzbar ist.

In einer vorteilhaften Ausgestaltung des erfindungsgemäßen Riemenspanners umfasst das hydraulische System mindestens ein Druckminderventil, das dazu geeignet ist, einen ihm zur Verfügung gestellten hydraulischen Druck von einem Eingangsniveau auf ein demgegenüber verringertes Ausgangsniveau zu mindern, wobei vorzugsweise das Ausgangsniveau konstant haltbar ist.

In einer vorteilhaften Weiterbildung dieser Ausgestaltung umfasst das hydraulische System mindestens ein zweites Druckminderventil, mittels dessen der hydraulische Druck auf ein anderes Ausgangsniveau minderbar ist als mittels des ersten Druckminderventils. Bei dieser Ausgestaltung des Riemengetriebes ist es vorgesehen, dass die beiden Druckminderventile zwecks Veränderung der Spannkraft des Riemenspanners wechselweise aktivierbar und deaktivierbar sind, wobei beide Druckminderventile jeweils in Wirkverbindung mit dem Hydraulikzylinder des Riemenspanners bringbar sind. Auf diese Weise wird die Möglichkeit geschaffen, den an dem Hydraulikzylinder anliegenden hydraulischen Druck zwischen dem Ausgangsniveau des ersten Druckminderventils und dem Ausgangsniveau des zweiten Druckminderventils umzuschalten. Zwecks Erhöhung der Spannkraft des Riemenspanners ist es möglich, derart zwischen dem ersten und dem zweiten Druckminderventil umzuschalten, dass der Hydraulikzylinder mit dem Druckminderventil in Wirkverbindung steht, das das höhere Ausgangsniveau aufweist. Umgekehrtes gilt entsprechend.

Alternativ zu einem hydraulischen System mit zwei alternativ wirkenden Druckminderventilen ist es denkbar, dass das eine Druckminderventil des hydraulischen Systems des Riemengetriebes zwischen einem Normalzustand und einem Hochzustand umschaltbar ist. Entsprechendes ist vorstehend im Zusammenhang mit dem erfindungsgemäßen Verfahren dargelegt. Insbesondere ist es denkbar, ein solches Druckminderventil im Zuge des Wechsels des Riemengetriebes zwischen dessen Normalbetrieb und dessen Reversierbetrieb zwischen seinem Hochzustand und seinem Normalzustand umzuschalten, dies jeweils mit dem Ziel, das Niveau des hydraulischen Drucks an dem Hydraulikzylinder korrespondierend mit dem Wechsel des Riemengetriebes von dessen Normalbetrieb zu dessen Reversierbetrieb anzuheben, sodass analog die Spannkraft des Riemenspanners auf den Treibriemen gesteigert wird.

Die genannte Ausgestaltung des Riemengetriebes mit einem hydraulischen System mit einem umschaltbaren Druckminderventil kann weiterhin dann vorteilhaft sein, wenn das hydraulische System ein zweites Druckminderventil umfasst, mittels dessen das Umschalten des ersten Druckminderventils zwischen seinem Normalzustand und seinem Hochzustand bewirkbar ist. Hierzu ist mittels des zweiten Druckminderventils ein Offsetdruck auf das erste Druckminderventil aufbringbar, wodurch das Ausgangsniveau des ersten Druckminderventils anhebbar ist. Vorzugsweise ist das Ausgangsniveau des ersten Druckminderventils um den Betrag des Offsetdrucks anhebbar. Eine unmittelbare strömungstechnische Verbindung zwischen dem zweiten Druckminderventil und dem Hydraulikzylinder des Riemenspanners besteht bei dieser Ausführungsvariante nicht.

Bei der beschriebenen Ausgestaltung kann es weiterhin besonders vorteilhaft sein, wenn das hydraulische System mindestens ein Steuerventil umfasst, das strömungstechnisch zwischen den beiden Druckminderventilen angeordnet ist. Ein solches Steuerventil ist dazu geeignet, den mittels des zweiten Druckminderventils bereitgestellten Offsetdruck wahlweise auf das erste Druckminderventil zu schalten, wodurch in der beschriebenen Weise das Ausgangsniveau des ersten Druckminderventils veränderbar ist. Wie vorstehend im Zusammenhang mit dem erfindungsgemäßen Verfahren bereits beschrieben, kann es hierbei vorteilhaft sein, wenn das Steuerventil mit einem Aktor zusammenwirkt, der mittels eines Schaltsignals schaltbar ist. Das Riemengetriebe kann einen Signalgeber umfassen, mittels dessen ein entsprechendes Schaltsignal erzeugbar ist, wobei die Erzeugung des Schaltsignals korrespondierend mit einem Wechsel des Riemengetriebes zwischen dessen Normalbetrieb und dessen Reversierbetrieb erfolgt.

Die Erfindung ist nachstehend anhand eines Ausführungsbeispiels, das in den Figuren dargestellt ist, näher erläutert. Es zeigt:
- Fig. 1:: Eine schematische Ansicht eines erfindungsgemäßen Riemengetriebes,
- Fig. 2:: Eine schematische Darstellung eines hydraulischen Systems des Riemengetriebes gemäß Figur 1,
- Fig. 3:: Eine schematische Darstellung eines alternativen hydraulischen Systems des Riemengetriebes gemäß Figur 1,
- Fig. 4:: Eine schematische Darstellung eines weiteren alternativen hydraulischen Systems des Riemengetriebes gemäß Figur 1,
- Fig. 5:: Ein erfindungsgemäßes Riemengetriebe in Zusammenwirkung mit einem Fahrantrieb, wobei das Riemengetriebe in einem Normalbetrieb betrieben wird, und
- Fig. 6:: Das Riemengetriebe gemäß Figur 5, wobei das Riemengetriebe in einem Reversierbetrieb betrieben wird.

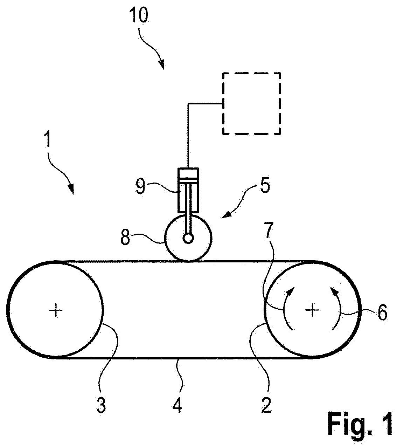

Ein Ausführungsbeispiel, das in den **Figuren 1 bis 4** dargestellt ist, umfasst ein erfindungsgemäßes Riemengetriebe **1**, das sich insbesondere anhand von **Figur 1** ergibt. Das Riemengetriebe **1** umfasst eine Antriebsscheibe **2**, eine Abtriebsscheibe **3** sowie einen Treibriemen **4**. Die Antriebsscheibe **2** ist mittels einer in den Figuren nicht dargestellten Antriebseinrichtung, insbesondere einer Verbrennungskraftmaschine, drehantreibbar gelagert, sodass die Antriebsscheibe **2** mit einem Drehmoment beaufschlagt werden kann. Der Treibriemen **4** ist derart um die Antriebsscheibe **2** und die Abtriebsscheibe **3** gespannt, dass er dazu geeignet ist, das auf die Antriebsscheibe **2** ausgeübte Drehmoment auf die Abtriebsscheibe **3** zu übertragen. Hierzu liegt der Treibriemen **4** in einem gespannten Zustand vor, mittels dessen eine Kraftübertragung zwischen der Antriebsscheibe **2** und der Abtriebsscheibe **3** möglichst schlupffrei erfolgen soll. Um den Treibriemen **4** fortwährend zu spannen, verfügt das Riemengetriebe **1** ferner über einen Riemenspanner **5**, der mittels eines Spannglieds **8,** das hier in Form einer Spannrolle ausgeführt ist, auf den Treibriemen **4** drückt. Die Druckrichtung des Riemenspanners **5** ist in dem gezeigten Beispiel zumindest im Wesentlichen senkrecht zu einer Mittelachse des Treibriemens **4**, sodass der Treibriemen **4** in eine Wirkrichtung des Riemenspanners **5** ausgelenkt und hierdurch mit einer Zugspannung beaufschlagt wird.

Das Riemengetriebe **1** ist sowohl in einem Normalbetrieb als auch in einem Reversierbetrieb betreibbar. Die beiden Betriebsarten unterscheiden sich dadurch, dass die Antriebsscheibe **2** im Normalbetrieb des Riemengetriebes **1** in eine Antriebsrichtung **6** angetrieben wird, während die Antriebsscheibe **2** im Reversierbetrieb des Riemengetriebes **1** in eine zu der Antriebsrichtung **6** gegensinnige Reversierrichtung **7** angetrieben wird. Die Veränderung der Drehrichtung der Antriebsscheibe **2** von der Antriebsrichtung **6** zu der Reversierrichtung **7** sowie umgekehrt führt zu einer Veränderung des Spannungszustands des Treibriemens **4**. Insbesondere vertauschen sich Lasttrum und Leertrum im Moment des Wechsels zwischen dem Normalbetrieb und dem Reversierbetrieb des Riemengetriebes **1** ("Lastumkehr").

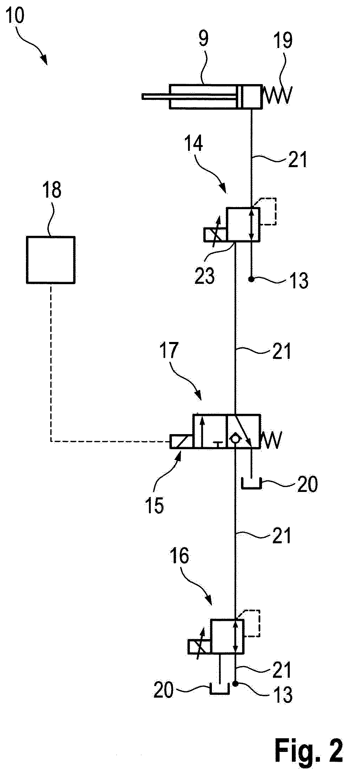

Der Riemenspanner **5** ist in dem gezeigten Beispiel mit einer Spannfeder **19** ausgestattet, die sich insbesondere anhand der **Figuren 2 bis 4** ergibt. Die Spannfeder **19** liegt in einem vorgespannten Zustand vor, sodass sie konstant einen Anpressdruck der Spannglieds **8** auf den Treibriemen **4** bewirkt. Ferner ist der Riemenspanner **5** in dem gezeigten Beispiel mit einem Hydraulikzylinder **9** ausgestattet, mittels dessen eine zusätzliche Spannkraft auf das Spannglied **8** aufbringbar ist. Der Hydraulikzylinder **9** wirkt mit einem hydraulischen System **10** zusammen, mittels dessen ein hydraulischer Druck an den Hydraulikzylinder **9** anlegbar ist. Verschiedene Ausführungsformen eines solchen hydraulischen Systems **10** sind in den **Figuren 2 bis 4** dargelegt.

In einer ersten Ausführungsform, die sich aus **Figur 2** ergibt, umfasst das hydraulische System **10** zwei Druckminderventile **14**, **16.** Das erste Druckminderventil **14** wirkt mit einer Druckquelle **13** zusammen, mittels der ein Arbeitsfluid unter Druck setzbar ist. Das Arbeitsfluid liegt mithin an dem ersten Druckminderventil **14** auf einem Druckniveau vor, das im Weiteren als Eingangsniveau bezeichnet wird. Die Funktion des Druckminderventils **14** besteht darin, eine Druckminderung vorzunehmen, sodass das Arbeitsfluid beim Austritt aus dem Druckminderventil **14** auf einem Druckniveau vorliegt, das im Weiteren als Ausgangsniveau bezeichnet wird. Das Ausgangsniveau ist geringer als das Eingangsniveau. Das erste Druckminderventil **14** ist mittels einer hydraulischen Leitung **21** mit dem Hydraulikzylinder **9** verbunden, sodass das Ausgangsniveau des Druckminderventils **14** an dem Hydraulikzylinder **9** anliegt. Entsprechend ergibt sich eine Spannkraft des Riemenspanners **5**, die einer Summe einer Federkraft der Spannfeder **19** und einer Druckkraft des Hydraulikzylinders **9** entspricht. Letztere ist wiederum proportional zu dem an dem Hydraulikzylinder **9** anliegenden hydraulischen Druck.

Um die Spannkraft des Riemenspanners **5** zu verändern, wird unter Verwendung des hydraulischen Systems **10** gemäß **Figur 2** ein Offsetdruck auf das erste Druckminderventil **14** aufgegeben. Hierzu ist das erste Druckminderventil **14** mittels hydraulischer Leitungen **21** mit einem zweiten Druckminderventil **16** verbunden, das unter Verwendung eines Steuerventils **17** wahlweise dem ersten Druckminderventil **14** zuschaltbar ist. Das zweite Druckminderventil **16** ist in seiner Funktionsweise mit dem ersten Druckminderventil **14** vergleichbar und dient mithin der Bereitstellung eines definierten Ausgangsniveaus eines mittels einer Druckquelle **13** bereitgestellten hydraulischen Drucks. In einer ersten Stellung des Steuerventils **17**, die in **Figur 2** veranschaulicht ist, ist ein Offseteingang **23** des ersten Druckminderventils **14** drucklos geschaltet, wobei der Offseteingang **23** strömungstechnisch mit einem Tank **20** verbunden ist. Mittels Umschaltens des Steuerventils **17** wird der Offseteingang **23** strömungstechnisch mit dem zweiten Druckminderventil **16** verbunden, sodass an dem ersten Druckminderventil **14** als Offsetdruck das Ausgangsniveau des zweiten Druckminderventils **16** anliegt. Dies hat zur Folge, dass sich das Verhalten des ersten Druckminderventils **14** verändert, nämlich das erste Druckminderventil **14** von seinem Normalzustand in einem Hochzustand umgeschaltet wird. Dieser ist dadurch charakterisiert, dass das Ausgangsniveau des ersten Druckminderventils **14** gegenüber dem Normalzustand gesteigert ist, vorzugsweise um den Betrag des Offsetdrucks. Dies wird dadurch erreicht, dass ein Arbeitspunkt des ersten Druckminderventils **14** infolge der Beaufschlagung desselben mit dem Offsetdruck verändert wird, sodass die Druckminderung des ersten Druckventils **14** von dem Eingangsniveau auf das Ausgangsniveau betragsmäßig reduziert wird, das heißt das Ausgangsniveau angehoben wird. Mithin ist es Ausgangsniveau bei Anliegen des Offsetdrucks höher als in Abwesenheit des Offsetdrucks.

Diese Anhebung des Ausgangsniveaus des ersten Druckminderventils **14** hat zur Folge, dass sodann an dem Hydraulikzylinder 9 ein höherer hydraulischer Druck anliegt, der wiederum zu einer Erhöhung der Spannkraft des Riemenspanners **5** führt. Auf diese Weise ist der Riemenspanner **5** dazu geeignet, die im Wirkungsbereich des Riemenspanners **5** in dem Treibriemen **4** schlagartig ansteigende Zugspannung, die im Zuge des Wechsels des Riemengetriebes **1** von dessen Normalbetrieb zu dessen Reversierbetrieb auftritt, abzufangen, sodass der Treibriemen **4** durchgehend mittels des Riemenspanners **5** auf Spannung gehalten wird. Ein Abfall der Zugspannung in dem Treibriemen **4** und ein infolgedessen auftretender Schlupf kann auf diese Weise vermieden werden.

In dem gezeigten Beispiel ist dabei besonders vorteilhaft das Steuerventil **17** mit einem Aktor **15** ausgestattet, wobei der Aktor **15** grundsätzlich elektrisch, hydraulisch oder pneumatisch sein kann. In dem gezeigten Beispiel ist der Aktor **15** mittels eines elektrischen Schaltsignals ansteuerbar, das mittels eines elektrischen Signalgebers **18** erzeugt wird. Der Signalgeber **18** ist derart in das übrige Riemengetriebe **1** integriert, dass er das Schaltsignal zur Schaltung des Steuerventils **17** korrespondierend mit dem Wechsel des Riemengetriebes **1** zwischen dem Normalbetrieb und dem Reversierbetrieb absetzt. Insbesondere wird das Schaltsignal mittels des Signalgebers **18** in dem Moment erzeugt, in dem das Riemengetriebe 1 von seinem Normalbetrieb zu seinem Reversierbetrieb oder umgekehrt wechselt.

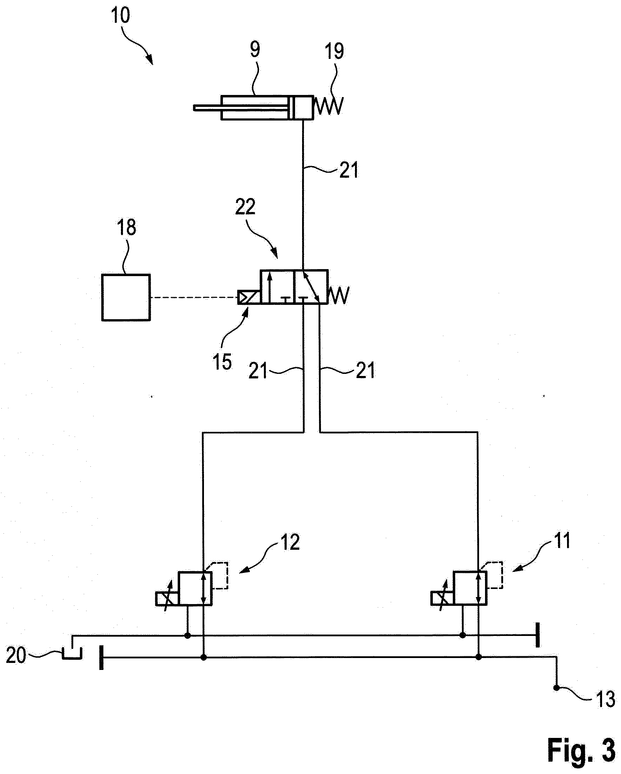

In einer weiteren Ausführungsform des erfindungsgemäßen Riemengetriebes **1** ist das ihm zugehörige hydraulische System **10** anders ausgeführt. Diese zweite Variante ist in **Figur 3** veranschaulicht. Das hydraulische System **10** umfasst dort ebenfalls zwei Druckminderventile **11**, **12**, die im Unterschied zu dem hydraulischen System **10** gemäß **Figur 2** jedoch anders verschaltet sind. Somit werden die beiden Druckminderventile **11**, **12** alternativ unmittelbar mit dem Hydraulikzylinder **9** des Riemenspanners **5** strömungstechnisch verbunden. Hierzu ist zwischen dem Hydraulikzylinder **9** und den Druckminderventilen **11**, **12** ein Steuerventil **22** angeordnet, das alternativ eine strömungstechnische Verbindung des Hydraulikzylinders **9** mit dem ersten Druckminderventil **11** oder dem zweiten Druckminderventil **12** herstellt. Die beiden Druckminderventile **11**, **12** unterscheiden sich dabei insoweit, als sie eine unterschiedliche Minderung des an ihnen anliegenden Eingangsniveaus eines zur Verfügung gestellten hydraulischen Drucks vornehmen. Mithin ist ein Ausgangsniveau des hydraulischen Drucks des ersten Druckminderventils **11** ein anderes als das Ausgangsniveau des zweiten Druckminderventils **12**. Zur Veränderung der Spannkraft des Hydraulikzylinders **9** kann nunmehr mittels des Steuerventils **22** zwischen den beiden Druckminderventilen **11**, **12** umgeschaltet werden, wobei insbesondere korrespondierend mit einem Wechsel des Riemengetriebes **1** von dem Normalbetrieb zu dem Reversierbetrieb dasjenige Druckminderventil **11**, **12** mit dem Hydraulikzylinder **9** verbunden wird, dessen Ausgangsniveau höher ist als das Ausgangsniveau des jeweils anderen Druckminderventils **11**, **12**. Das höhere Ausgangsniveau führt zu einer höheren Spannkraft des Riemenspanners **5**, der daraufhin analog zu der vorstehend beschriebenen Art und Weise eine dauerhafte Ausübung einer Spannkraft auf den Treibriemen **4** bewirken kann, selbst im Moment der Lastumkehr des Treibriemens **4** im Zuge des Wechsels der Betriebsweise des Riemengetriebes **1**.

Das Steuerventil **22** ist auch hier mit einem elektrischen Aktor **15** ausgestattet, der mittels eines Signalgebers **18** mit einem Schaltsignal ansteuerbar ist. Auf diese Weise kann besonders einfach die erforderliche zeitliche Koppelung des Umschaltens des Steuerventils **22** und des Wechsels der Betriebsweise des Riemengetriebes **1** erfolgen, wobei in dem gezeigten Beispiel das Steuerventil **22** eine Sekunde vor dem Wechsel der Betriebsweise des Riemengetriebes **1** umgeschaltet wird.

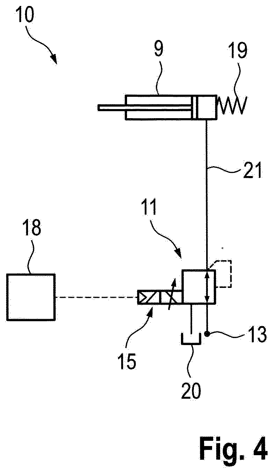

In einer weiteren Ausführungsform des erfindungsgemäßen Riemengetriebes **1**, die sich aus **Figur 4** ergibt, ist das hydraulische System **10** mit lediglich einem einzigen Druckminderventil **11** ausgestattet. Dieses Druckminderventil **11** ist verstellbar ausgeführt, sodass das Verhältnis des mittels einer Druckquelle **13** bereitgestellten Eingangsniveaus eines hydraulischen Drucks zu einem Ausgangsniveau, auf das das Druckminderventil **11** den hydraulischen Druck mindert, veränderbar ist. Hierzu wirkt das Druckminderventil **11** unmittelbar mit einem Aktor **15** zusammen, der dazu geeignet ist, das Druckminderventil **11** zu verstellen. Die Verstellung des Druckminderventils **11** korrespondiert mit dem Wechsel des Riemengetriebes **1** zwischen seinem Normalbetrieb und seinem Reversierbetrieb. Somit kann insbesondere beim Wechsel des Riemengetriebes **1** von seinem Normalbetrieb zu seinem Reversierbetrieb das Verhältnis "Ausgangsniveau zu Eingangsniveau" des Druckminderventils **11** vergrößert und umgekehrt beim Wechsel des Riemengetriebes **1** von seinem Reversierbetrieb zu seinem Normalbetrieb verkleinert werden.

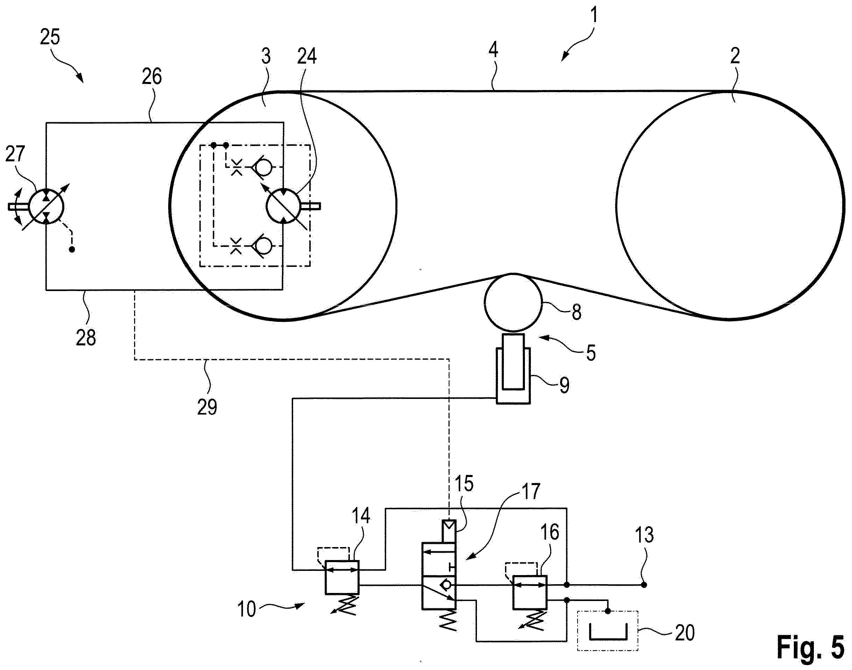

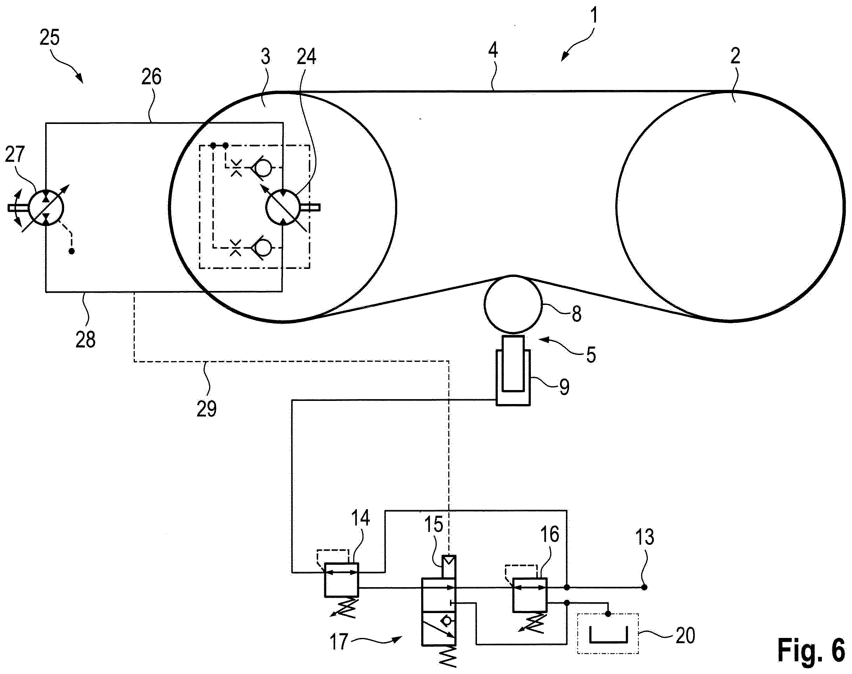

Ein weiteres Ausführungsbeispiel, das in den **Figuren 5** **und** **6** dargestellt ist, umfasst ein erfindungsgemäßes Riemengetriebe **1** mit einer Antriebsscheibe **2** und einer Abtriebsscheibe **3**. Die Antriebsscheibe **2** wird hier von einer Verbrennungskraftmaschine angetrieben und überträgt ein auf diese Weise bereitgestelltes Antriebsdrehmoment mittels eines Treibriemens **4** auf die Abtriebsscheibe **3**. Diese ist in dem gezeigten Beispiel mit einer Hydraulikpumpe **24** gekoppelt, mittels der ein Arbeitsfluid unter Druck setzbar ist. Die Hydraulikpumpe **24** ist in einen hydraulischen Kreislauf **25** eingebunden, wobei das Arbeitsfluid mittels einer Hydraulikleitung **26** zu einem Hydraulikmotor **27** leitbar ist, der auf diese Weise antreibbar ist. In dem gezeigten Beispiel dient der Hydraulikmotor **27** zum Antrieb eines Fahrantriebs der zugehörigen Erntemaschine. Das Arbeitsfluid ist ausgehend von dem Hydraulikmotor **27** mittels einer weiteren Hydraulikleitung **28** zurück zu der Hydraulikpumpe **24** leitbar.

Der Treibriemen **4** ist mittels eines Riemenspanners **5** gespannt, wobei der Riemenspanner in einem Abschnitt des Treibriemens **4** wirkt, der während des Normalbetriebs des Riemengetriebes **1** das Leertrum bildet. Der Riemenspanner **5** verfügt über einen Hydraulikzylinder **9**, mittels dessen ein Spannglied **8** gegen den Treibriemen **4** drückbar ist. Ferner verfügt der Riemenspanner **5** über eine nicht dargestellte Spannfeder **19**, die das Spannglied **8** permanent mit einer gewissen Anpresskraft beaufschlagt. Der Hydraulikzylinder **9** ist des Weiteren mit einem hydraulischen System **10** verbunden, das gemäß dem in **Figur 2** dargestellten Beispiel aufgebaut ist. Zu der Funktion wird entsprechend auf obige Erläuterung zu **Figur 2** verwiesen.

In besonderer Weise wirkt das Steuerventil **17** des hydraulischen Systems **10** hier mit einem hydraulischen Aktor **15** zusammen. Dieser ist wiederum mittels einer Hydraulikleitung **29** strömungstechnisch an die Hydraulikleitung **28** des hydraulischen Kreislaufs **25** angeschlossen, sodass ein in der Hydraulikleitung **28** anliegender Druck auch an dem Aktor **15** anliegt. Während des Normalbetriebs des Riemengetriebes **1** liegt in der Hydraulikleitung **28** des hydraulischen Kreislaufs **25** lediglich ein Rücklaufdruck von dem Hydraulikmotor **27** zurück zu der Hydraulikpumpe **24** an. Der Aktor **15** löst daher nicht aus, sodass das Steuerventil **17** in einer ersten Stellung vorliegt, in der es das zweite Druckminderventil **16** nicht mit dem ersten Druckminderventil **14** verbindet. Stattdessen ist ein Offseteingang **23** des ersten Druckminderventils **14** mit dem Tank **20** verbunden.

Im Zuge der Umschaltung des Betriebs des Riemengetriebes **1** von seinem Normalbetrieb in seinen Reversierbetrieb, ändert sich die Stellung des Steuerventils **17**. Der Reversierbetrieb beinhaltet, dass der Fahrantrieb, der in dem Normalbetrieb mittels des Hydraulikmotors **27** angetrieben wird, nunmehr selbst als aktiv angetrieben wird anstatt mittels der Hydraulikpumpe **24** angetrieben zu werden. Dies hat zur Folge, dass der Hydraulikmotor **27** als Hydraulikpumpe und umgekehrt die Hydraulikpumpe **24** als Hydraulikmotor wirken. Entsprechend wird die Abtriebsscheibe **3** des Riemengetriebes **1** in dem Reversierbetrieb als Antriebsscheibe verwendet und umgekehrt die Antriebsscheibe **2** als Abtriebsscheibe. Diese Umschaltung führt dazu, dass der Treibriemen **4** ein anderes Spannungsprofil erhält, wobei nämlich der Abschnitt des Treibriemens **4**, der in dem Normalbetrieb des Riemengetriebes **1** das Leertrum bildet, nunmehr zum Lasttrum wird. Hiermit geht ein starker Anstieg der in besagtem Abschnitt herrschenden Zugspannung einher, die das vorstehend beschriebene "Wegdrücken" des Riemenspanners **5** sowie einen damit einhergehenden Spannungsverlust in dem Treibriemen **4** inklusive Gefahr des Auftretens eines Schlupfs des Treibriemens **4** verursachen kann. Um diesem Effekt zu begegnen, wird korrespondierend mit dem Umschalten von dem Normalbetrieb in den Reversierbetrieb die Spannkraft des Riemenspanners **5** erhöht. Dies gelingt hier analog zu dem in **Figur 2** dargestellten Beispiel mittels Zuschalten des zweiten Druckminderventils **16** auf den Offseteingang **23** des ersten Druckminderventils **14**.

Aufgrund der Wirkungsumkehr von Hydraulikmotor **27** und Hydraulikpumpe **24** steigt der hydraulische Druck des Arbeitsfluids in der Hydraulikleitung **28** an. Infolge der strömungstechnischen Koppelung der Hydraulikleitung **28** über die Hydraulikleitung **29** mit dem Aktor **15** löst letzterer aus und schaltet das Steuerventil **17** in seine zweite Stellung. In dieser stellt das Steuerventil **17** die strömungstechnische Verbindung zwischen dem zweiten Druckminderventil **16** und dem ersten Druckminderventil **14** her, sodass dieses in der vorstehend beschriebenen Weise mit einem Offsetdruck beaufschlagt wird. Dies hat wiederum zur Folge, dass das Ausgangsniveau des ersten Druckminderventils **14** ansteigt, insbesondere um den Betrag des Offsetdrucks. Infolgedessen erhöht sich sodann die Spannkraft des Riemenspanners **5**, da das Ausgangsniveau des ersten Druckminderventils **14** auf den Hydraulikzylinder **9** des Riemenspanners **5** einwirkt.

Die beschriebene Ausgestaltung stellt mithin eine hydraulische Koppelung der Betriebsweise des Riemengetriebes **1** mit der Schaltung des Steuerventils **17** her, die unmittelbaren Einfluss auf die Spannkraft des Riemenspanners **5** hat. Infolgedessen wird die Spannkraft des Riemenspanners **5** zwangsläufig korrespondierend mit einem Wechsel zwischen dem Normalbetrieb und dem Reversierbetrieb des Riemengetriebes **1** verändert.

### Bezugszeichenliste

- 1: Riemengetriebe
- 2: Antriebsscheibe
- 3: Abtriebsscheibe
- 4: Treibriemen
- 5: Riemenspanner
- 6: Antriebsrichtung
- 7: Reversierrichtung
- 8: Spannglied
- 9: Hydraulikzylinder
- 10: hydraulisches System
- 11: Druckminderventil
- 12: Druckminderventil
- 13: Druckquelle
- 14: Druckminderventil
- 15: Aktor
- 16: Druckminderventil
- 17: Steuerventil
- 18: Signalgeber
- 19: Spannfeder
- 20: Tank
- 21: Hydraulikleitung
- 22: Steuerventil
- 23: Offseteingang
- 24: Hydraulikpumpe
- 25: hydraulischer Kreislauf
- 26: Hydraulikleitung
- 27: Hydraulikmotor
- 28: Hydraulikleitung
- 29: Hydraulikleitung

## Patentansprüche

1. Verfahren zum Betrieb eines Riemengetriebes (1), das Riemengetriebe (1) umfassend
- mindestens eine Antriebsscheibe (2),
- mindestens eine Abtriebsscheibe (3),
- mindestens einen die Antriebsscheibe (1) und die Abtriebsscheibe (3) verbindenden Treibriemen (4) sowie
- mindestens einen Riemenspanner (5),
wobei mittels des Riemenspanners (5) zumindest während eines Betriebs des Riemengetriebes (1) der Treibriemen (4) mit einer Spannkraft beaufschlagt wird,
wobei das Riemengetriebe (1) grundsätzlich in einem Normalbetrieb und zeitweise in einem Reversierbetrieb betrieben wird,
wobei die Antriebsscheibe (2) im Normalbetrieb in eine Antriebsrichtung (6) und im Reversierbetrieb in eine zu der Antriebsrichtung (6) gegensinnige Reversierrichtung (7) angetrieben wird,
wobei ein Umschalten von dem Normalbetrieb in den Reversierbetrieb und umgekehrt mit einer Lastumkehr in dem Treibriemen (4) einhergeht, infolge der ein Lasttrum des Treibriemens (4) zu dessen Leertrum wird und umgekehrt,
**dadurch gekennzeichnet, dass**
die Spannkraft des Riemenspanners (5) korrespondierend mit einem Wechsel zwischen dem Normalbetrieb und dem Reversierbetrieb verändert wird.

2. Verfahren nach Anspruch 1, **dadurch gekennzeichnet, dass** die Spannkraft beim Wechsel von dem Normalbetrieb zu dem Reversierbetrieb erhöht und beim Wechsel von dem Reversierbetrieb zu dem Normalbetrieb verringert wird.

3. Verfahren nach einem der vorhergehenden Ansprüche, **dadurch gekennzeichnet, dass** der Riemenspanner (5) ein Spannglied (8) umfasst, wobei die Spannkraft mittels des Spannglieds (8) auf den Treibriemen (4) aufgebracht wird, wobei das Spannglied (8) mit einem Hydraulikzylinder (9) zusammenwirkt, der Teil eines hydraulischen Systems (10) ist.

4. Verfahren nach Anspruch 3, **dadurch gekennzeichnet, dass** die Spannkraft mittels einer Veränderung eines hydraulischen Drucks, der an dem Hydraulikzylinder (9) anliegt, verändert wird.

5. Verfahren nach Anspruch 4, **dadurch gekennzeichnet, dass** zwecks Veränderung des an dem Hydraulikzylinder (9) anliegenden hydraulischen Drucks zwischen einem ersten Druckminderventil (11) des hydraulischen Systems (10) und einem zweiten Druckminderventil (12) des hydraulischen Systems (10) umgeschaltet wird, vorzugsweise mittels eines Steuerventils (22), wobei das erste Druckminderventil (11) den hydraulischen Druck einer Druckquelle (13) des hydraulischen Systems (10) auf ein Normaldruckniveau und das zweite Druckminderventil (12) den hydraulischen Druck der Druckquelle (13) auf ein Hochdruckniveau mindern, wobei das Hochdruckniveau höher ist als das Normaldruckniveau.

6. Verfahren nach Anspruch 4, **dadurch gekennzeichnet, dass** mindestens ein Druckminderventil (14) des hydraulischen Systems (10) zwecks Veränderung des hydraulischen Drucks zwischen einem Normalzustand und einem Hochzustand umgeschaltet wird, wobei das Druckminderventil (14) den hydraulischen Druck bei Vorliegen in seinem Normalzustand stärker mindert als bei Vorliegen in seinem Hochzustand.

7. Verfahren nach Anspruch 6, **dadurch gekennzeichnet, dass** das Druckminderventil (14) mittels eines Aktors (15) zwischen dem Normalzustand und dem Hochzustand umgeschaltet wird, wobei der Aktor (15) korrespondierend mit einem Wechsel zwischen dem Normalbetrieb und dem Reversierbetrieb des Riemengetriebes geschaltet wird.

8. Verfahren nach Anspruch 6, **dadurch gekennzeichnet, dass** das Druckminderventil (14) mit einem zweiten Druckminderventil (16) zusammenwirkt, mittels dessen ein Offsetdruck auf das erste Druckminderventil (14) aufgebbar ist, wobei das erste Druckminderventil (14) mittels Beaufschlagung mit dem Offsetdruck in seinen Hochzustand überführt wird.

9. Verfahren nach Anspruch 8, **dadurch gekennzeichnet, dass** die beiden Druckminderventile (14, 16) mittels eines Steuerventils (17) hydraulisch gekoppelt sind, wobei mittels Betätigung des Steuerventils (17) die Beaufschlagung des ersten Druckminderventils (14) mit dem Offsetdruck wechselweise aktiviert oder deaktiviert wird.

10. Verfahren nach Anspruch 9, **dadurch gekennzeichnet, dass** das Steuerventil (17) mittels eines Schaltsignals betätigt wird, das korrespondierend mit einem Wechsel zwischen dem Normalbetrieb und dem Reversierbetrieb des Riemengetriebes erzeugt wird, wobei vorzugsweise das Schaltsignal elektrisch, hydraulisch oder pneumatisch ist.

11. Verfahren nach Anspruch 10, **dadurch gekennzeichnet, dass** das Steuerventil (17) mittels eines hydraulischen Aktors (15) geschaltet wird, der mit einem hydraulischen Kreislauf (25) gekoppelt ist, wobei der hydraulische Kreislauf (25) mit dem Riemengetriebe (1), vorzugsweise unmittelbar, zusammenwirkt.

12. Riemengetriebe (1), insbesondere für ein Vorsatzgerät einer landwirtschaftlichen Erntemaschine, umfassend
- mindestens eine Antriebsscheibe (2),
- mindestens eine Abtriebsscheibe (3),
- mindestens einen die Antriebsscheibe (2) und die Abtriebsscheibe (3) verbindenden Treibriemen (4) sowie
- mindestens einen Riemenspanner (5),
wobei der Riemenspanner (5) zumindest während eines Betriebs des Riemengetriebes (1) zum Beaufschlagen des Treibriemens (4) mit einer Spannkraft eingerichtet ist,
wobei die Antriebsscheibe (2) in einem Normalbetrieb des Riemengetriebes (1) in eine Antriebsrichtung (6) und in einem Reversierbetrieb des Riemengetriebes (1) in eine zu der Antriebsrichtung (6) gegensinnige Reversierrichtung (7) antreibbar ist,
wobei ein Umschalten von dem Normalbetrieb in den Reversierbetrieb und umgekehrt mit einer Lastumkehr in dem Treibriemen einhergeht, infolge der ein Lasttrum des Treibriemens zu dessen Leertrum wird und umgekehrt,
wobei das Riemengetriebe ein hydraulisches System (10) umfasst, das mit einem Hydraulikzylinder (9) des Riemenspanners (5) verbunden ist, sodass die Spannkraft mittels Beaufschlagung des Hydraulikzylinders (9) mit hydraulischem Druck einer Druckquelle (13) des hydraulischen Systems (10) aufgebracht wird,
**dadurch gekennzeichnet, dass**
das hydraulische System (10) zum Verändern der Spannkraft des Riemenspanners (5) korrespondierend mit einem Wechsel zwischen dem Normalbetrieb und dem Reversierbetrieb eingerichtet ist.

13. Riemengetriebe (1) nach Anspruch 12, **dadurch gekennzeichnet, dass** das hydraulische System (10) mindestens ein Druckminderventil (11, 14) umfasst, das zum Mindern des hydraulischen Drucks von einem Eingangsniveau auf ein demgegenüber verringertes Ausgangsniveau eingerichtet ist.

14. Riemengetriebe (1) nach Anspruch 13, **dadurch gekennzeichnet, dass** das hydraulische System (10) mindestens ein zweites Druckminderventil (12) umfasst, das zum Mindern des hydraulischen Drucks auf ein anderes Ausgangsniveau als mittels des ersten Druckminderventils (11) eingerichtet ist, wobei ein Steuerventil (22) des hydraulischen Systems (10) dazu eingerichtet ist, die beiden Druckminderventile (11, 12) zwecks Veränderung der Spannkraft des Riemenspanners (5) wechselweise zu aktivieren, sodass an dem Hydraulikzylinder (9) entweder das Ausgangsniveau des ersten Druckminderventils (11) oder das Ausgangsniveau des zweiten Druckminderventils (12) anliegt.

15. Riemengetriebe (1) nach Anspruch 13, **dadurch gekennzeichnet, dass** das Druckminderventil (14) zum Umschalten zwischen einem Normalzustand und einem Hochzustand eingerichtet ist, wobei das Ausgangsniveau des Druckminderventils (14) bei Vorliegen desselben in seinem Hochzustand höher ist als bei Vorliegen in seinem Normalzustand.

16. Riemengetriebe (1) nach Anspruch 15, **gekennzeichnet durch** ein zweites Druckminderventil (16), das zum Aufbringen eines Offsetdrucks auf das erste Druckminderventil (14) eingerichtet ist, wobei infolge der Aufbringung des Offsetdrucks das Ausgangsniveau des ersten Druckminderventils (14) angehoben wird, vorzugsweise um den Betrag des Offsetdrucks.

17. Riemengetriebe (1) nach Anspruch 16, **gekennzeichnet durch** ein Steuerventil (17), das zwischen den beiden Druckminderventilen (14, 16) angeordnet ist und das eingerichtet ist den mittels des zweiten Druckminderventils (16) bereitgestellte Offsetdruck auf das erste Druckminderventil (14) zu schalten.

## Claims

1. A method for operating a belt drive (1), the belt drive (1) comprising
- at least one driving pulley (2),
- at least one driven pulley (3),
- at least one drive belt (4) connecting the driving pulley (1) and the driven pulley (3), and
- at least one belt tensioner (5),
wherein, at least during an operation of the belt drive (1), a tensioning force is applied to the drive belt (4) by means of the belt tensioner (5),
wherein the belt drive (1) is principally in a normal operation and intermittently in a reverse operation,
wherein in normal operation, the driving pulley (2) is driven in a drive direction (6) and in the reverse operation in a reverse direction (7) which is in the opposite sense to the drive direction (6),
wherein a changeover from the normal operation into the reverse operation and vice versa is accompanied by a load reversal in the drive belt (4), as a consequence of which a load side of the drive belt (4) becomes its slack side and vice versa,
**characterized in that**
the tensioning force of the belt tensioner (5) is changed in correspondence with a change between the normal operation and the reverse operation.

2. The method according to claim 1, **characterized in that** the tensioning force is increased upon the change from the normal operation to the reverse operation and is decreased upon the change from the reverse operation to the normal operation.

3. The method according to one of the preceding claims, **characterized in that** the belt tensioner (5) comprises a tensioning member (8), wherein the tensioning force is applied to the drive belt (4) by means of the tensioning member (8), wherein the tensioning member (8) cooperates with a hydraulic cylinder (9) which is part of a hydraulic system (10).

4. The method according to claim 3, **characterized in that** the tensioning force is changed by means of a change in a hydraulic pressure which is applied to the hydraulic cylinder (9).

5. The method according to claim 4, **characterized in that** for the purposes of changing the hydraulic pressure applied to the hydraulic cylinder (9), a changeover is made between a first pressure reducing valve (11) of the hydraulic system (10) and a second pressure reducing valve (12) of the hydraulic system (10), preferably by means of a control valve (22), wherein the first pressure reducing valve (11) reduces the hydraulic pressure of a pressure source (13) of the hydraulic system (10) to a normal pressure level and the second pressure reducing valve (12) reduces the hydraulic pressure of the pressure source (13) to a high pressure level, wherein the high pressure level is higher than the normal pressure level.

6. The method according to claim 4, **characterized in that** at least one pressure reducing valve (14) of the hydraulic system (10) is changed over between a normal state and a high state for the purposes of changing the hydraulic pressure, wherein the pressure reducing valve (14) reduces the hydraulic pressure to a greater extent when in its normal state than when in its high state.

7. The method according to claim 6, **characterized in that** the pressure reducing valve (14) is changed over between the normal state and the high state by means of an actuator (15), wherein the actuator (15) is switched in correspondence with a change between the normal operation and the reverse operation of the belt drive.

8. The method according to claim 6, **characterized in that** the pressure reducing valve (14) cooperates with a second pressure reducing valve (16), by means of which an offset pressure can be applied to the first pressure reducing valve (14), wherein the first pressure reducing valve (14) is transposed into its high state by means of pressurisation with the offset pressure.

9. The method according to claim 8, **characterized in that** the two pressure reducing valves (14, 16) are hydraulically coupled by means of a control valve (17), wherein, by actuating the control valve (17), the pressurisation of the first pressure reducing valve (14) with the offset pressure can be activated or deactivated in alternation.

10. The method according to claim 9, **characterized in that** the control valve (17) is actuated by means of a switch signal which is produced in correspondence with a change between the normal operation and the reverse operation of the belt drive, wherein preferably, the switch signal is electrical, hydraulic or pneumatic.

11. The method according to claim 10, **characterized in that** the control valve (17) is switched by means of a hydraulic actuator (15) which is coupled to a hydraulic circuit (25), wherein the hydraulic circuit (25) cooperates with the belt drive (1), preferably directly.

12. A belt drive (1), in particular for a front attachment of an agricultural harvesting machine, comprising
- at least one driving pulley (2),
- at least one driven pulley (3),
- at least one drive belt (4) connecting the driving pulley (2) and the driven pulley (3), as well as
- at least one belt tensioner (5),
wherein, at least during an operation of the belt drive (1), the belt tensioner (5) is configured to apply a tensioning force to the drive belt (4),
wherein, in a normal operation of the belt drive (1), the driving pulley (2) can be driven in a drive direction (6), and in a reverse operation of the belt drive (1), it can be driven in a reverse direction (7) which is in the opposite sense to the drive direction (6),
wherein a changeover from the normal operation into the reverse operation and vice versa is accompanied by a load reversal in the drive belt, as a consequence of which a load side of the drive belt becomes its slack side, and vice versa,
wherein the belt drive comprises a hydraulic system (10) which is connected to a hydraulic cylinder (9) of the belt tensioner (5), so that the tensioning force is applied by pressurisation of the hydraulic cylinder (9) with hydraulic pressure from a pressure source (13) of the hydraulic system (10),
**characterized in that**
the hydraulic system (10) is configured to change the tensioning force of the belt tensioner (5) in correspondence with a change between the normal operation and the reverse operation.

13. The belt drive (1) according to claim 12, **characterized in that** the hydraulic system (10) comprises at least one pressure reducing valve (11, 14) which is configured to reduce the hydraulic pressure from an input level to an output level which is reduced in comparison therewith.

14. The belt drive (1) according to claim 13, **characterized in that** the hydraulic system (10) comprises at least one second pressure reducing valve (12) which is configured to reduce the hydraulic pressure to a different output level than that of the first pressure reducing valve (11), wherein a control valve (22) of the hydraulic system (10) is configured to activate the two pressure reducing valves (11, 12) in alternation for the purposes of changing the tensioning force of the belt tensioner (5), so that either the output level of the first pressure reducing valve (11) or the output level of the second pressure reducing valve (12) is applied to the hydraulic cylinder (9).

15. The belt drive (1) according to claim 13, **characterized in that** the pressure reducing valve (14) is configured to change over between a normal state and a high state, wherein the output level of the pressure reducing valve (14) when in its high state is higher than when in its normal state.

16. The belt drive (1) according to claim 15, **characterized by** a second pressure reducing valve (16) which is configured to apply an offset pressure to the first pressure reducing valve (14) wherein, as a consequence of the application of the offset pressure, the output level of the first pressure reducing valve (14) is raised, preferably by the amount of the offset pressure.

17. The belt drive (1) according to claim 16, **characterized by** a control valve (17) which is disposed between the two pressure reducing valves (14, 16) and which is configured to switch the offset pressure provided by means of the second pressure reducing valve (16) onto the first pressure reducing valve (14).

## Revendications

1. Procédé de fonctionnement d'une transmission à courroie (1), ladite transmission à courroie (1) comprenant
- au moins une poulie motrice (2),
- au moins une poulie menée (3),
- au moins une courroie d'entraînement (4) reliant la poulie motrice (2) et la poulie menée (3), ainsi que
- au moins un tendeur de courroie (5),
la courroie d'entraînement (4) étant soumise à une force de tension à l'aide du tendeur de courroie (5), au moins pendant un fonctionnement de la transmission à courroie (1),
la transmission à courroie (1) fonctionnant par principe en mode normal et de façon temporaire en mode inversé,
la poulie motrice (2) étant entraînée, en mode normal, dans un sens d'entraînement (6) et, en mode inversé, dans un sens inversé (7) opposé au sens d'entraînement (6),
une commutation du mode normal au mode inversé et inversement s'accompagnant d'une inversion de charge dans la courroie d'entraînement (4), à la suite de laquelle un brin tendu de la courroie d'entraînement (4) devient le brin mou de celle-ci et inversement,
**caractérisé en ce que**
la force de tension du tendeur de courroie (5) est modifiée en correspondance avec un changement entre le mode normal et le mode inversé.

2. Procédé selon la revendication 1, **caractérisé en ce que** lors du passage du mode normal au mode inversé, la force de tension est augmentée, et lors du passage du mode inversé au mode normal, elle est réduite.

3. Procédé selon une des revendications précédentes, **caractérisé en ce que** le tendeur de courroie (5) comprend un élément de tension (8), la force de tension étant appliquée à la courroie d'entraînement (4) au moyen de l'élément de tension (8), l'élément de tension (8) coopérant avec un vérin hydraulique (9) qui fait partie d'un système hydraulique (10).

4. Procédé selon la revendication 3, **caractérisé en ce que** la force de tension est modifiée par le biais d'un changement d'une pression hydraulique qui est appliquée au vérin hydraulique (9).

5. Procédé selon la revendication 4, **caractérisé en ce que**, pour la modification de la pression hydraulique appliquée au vérin hydraulique (9), une commutation est effectuée entre un premier réducteur de pression (11) du système hydraulique (10) et un deuxième réducteur de pression (12) du système hydraulique (10), de préférence au moyen d'un distributeur (22), le premier réducteur de pression (11) réduisant la pression hydraulique d'une source de pression (13) du système hydraulique (10) jusqu'à un niveau de pression normale, et le deuxième réducteur de pression (12) réduisant la pression hydraulique de la source de pression (13) jusqu'à un niveau de pression élevée, le niveau de pression élevée étant supérieur au niveau de pression normale.

6. Procédé selon la revendication 4, **caractérisé en ce qu'**au moins un réducteur de pression (14) du système hydraulique (10) est commuté entre un état normal et un état élevé, en vue de la modification de la pression hydraulique, le réducteur de pression (14) réduisant la pression hydraulique plus fortement lorsqu'il est dans son état normal que lorsqu'il est dans son état élevé.

7. Procédé selon la revendication 6, **caractérisé en ce que** le réducteur de pression (14) est commuté au moyen d'un actionneur (15) entre l'état normal et l'état élevé, l'actionneur (15) étant activé en correspondance avec un changement entre le mode normal et le mode inversé de la transmission à courroie (1).

8. Procédé selon la revendication 6, **caractérisé en ce que** le réducteur de pression (14) coopère avec un deuxième réducteur de pression (16) qui permet d'appliquer une pression de décalage au premier réducteur de pression (14), ledit premier réducteur de pression (14) étant amené dans son état élevé par le biais de la sollicitation avec la pression de décalage.

9. Procédé selon la revendication 8, **caractérisé en ce que** les deux réducteurs de pression (14, 16) sont couplés hydrauliquement au moyen d'un distributeur (17), l'actionnement du distributeur (17) ayant pour effet d'activer ou de désactiver en alternance l'application de la pression de décalage au premier réducteur de pression (14).

10. Procédé selon la revendication 9, **caractérisé en ce que** le distributeur (17) est actionné au moyen d'un signal de commutation qui est généré en correspondance avec un changement entre le mode normal et le mode inversé de la transmission à courroie, le signal de commutation étant de préférence électrique, hydraulique ou pneumatique.

11. Procédé selon la revendication 10, **caractérisé en ce que** le distributeur (17) est activé au moyen d'un actionneur hydraulique (15) qui est couplé à un circuit hydraulique (25), le circuit hydraulique (25) coopérant avec la transmission à courroie (1), de préférence de manière directe.

12. Transmission à courroie (1), destinée notamment à un outil frontal d'une machine de récolte agricole, comprenant :
- au moins une poulie motrice (2),
- au moins une poulie menée (3),
- au moins une courroie d'entraînement (4) reliant la poulie motrice (2) et la poulie menée (3), ainsi que
- au moins un tendeur de courroie (5),
le tendeur de courroie (5) étant conçu pour appliquer une force de tension à la courroie d'entraînement (4), au moins pendant un fonctionnement de la transmission à courroie (1),
la poulie motrice (2) étant entraînée, dans un mode normal de la transmission à courroie (1), dans un sens d'entraînement (6) et, dans un mode inversé de la transmission à courroie (1), dans un sens inversé (7) opposé au sens d'entraînement (6),
une commutation du mode normal au mode inversé et inversement s'accompagnant d'une inversion de charge dans la courroie d'entraînement, à la suite de laquelle un brin tendu de la courroie d'entraînement devient le brin mou de celle-ci et inversement,
la transmission à courroie (1) comprenant un système hydraulique (10) qui est relié à un vérin hydraulique (9) du tendeur de courroie (5), de sorte que la force de tension est produite par application d'une pression hydraulique d'une source de pression (13) du système hydraulique (10) au vérin hydraulique (9),
**caractérisée en ce que**
le système hydraulique (10) est conçu pour modifier la force de tension du tendeur de courroie (5), en correspondance avec un changement entre le mode normal et le mode inversé.

13. Transmission à courroie (1) selon la revendication 12, **caractérisée en ce que** le système hydraulique (10) comprend au moins un réducteur de pression (11, 14) qui est conçu pour réduire la pression hydraulique à partir d'un niveau d'entrée jusqu'à un niveau de sortie qui est diminué par rapport au niveau d'entrée.

14. Transmission à courroie (1) selon la revendication 13, **caractérisée en ce que** le système hydraulique (10) comprend au moins un deuxième réducteur de pression (12) qui est conçu pour réduire la pression hydraulique jusqu'à un niveau de sortie différent de celui obtenu au moyen du premier réducteur de pression (11), un distributeur (22) du système hydraulique (10) étant conçu pour activer en alternance les deux réducteurs de pression (11, 12), aux fins de modifier la force de tension du tendeur de courroie (5), de manière à ce que soit le niveau de sortie du premier réducteur de pression (11), soit le niveau de sortie du deuxième réducteur de pression (12) soit appliqué au vérin hydraulique (9).

15. Transmission à courroie (1) selon la revendication 13, **caractérisée en ce que** le réducteur de pression (14) est conçu pour commuter entre un état normal et un état élevé, le niveau de sortie du réducteur de pression (14), lorsque celui-ci est dans son état élevé, étant supérieur à son niveau lorsqu'il est dans son état normal.

16. Transmission à courroie (1) selon la revendication 15, **caractérisée en ce qu'**elle comprend un deuxième réducteur de pression (16) qui est conçu pour appliquer une pression de décalage au premier réducteur de pression (14), sachant que suite à l'application de la pression de décalage, le niveau de sortie du premier réducteur de pression (14) est augmenté, de préférence de la valeur de la pression de décalage.

17. Transmission à courroie (1) selon la revendication 16, **caractérisée en ce qu'**elle comprend un distributeur (17) qui est disposé entre les deux réducteurs de pression (4, 16) et qui est conçu pour appliquer au premier réducteur de pression (14), la pression de décalage fournie par le deuxième réducteur de pression (16).
